# EUROPÄISCHE PATENTANMELDUNG

(11) **EP 4 778 820 A1**
(43) Veröffentlichungstag der Anmeldung: **22.07.2026**
(21) Anmeldenummer: 26153045.5
(22) Anmeldetag: 20.01.2026
(51) Int. Cl.: B62M 6/45

(54) **VERFAHREN ZUM BETREIBEN EINES ELEKTROFAHRRADS**

(30) Priorität: 20.01.2025 DE 102025101838; 10.10.2025 DE 102025141367
(71) Anmelder: Robert Bosch GmbH, 70442 Stuttgart (DE)
(72) Erfinder: Prymus, Erika, 22654 Lund (SE); Reck, Joseph, 71093 Weil Im Schoenbuch (DE); Weinmann, Matthias, 72336 Balingen (DE); Fngergut, Sean Hendrik, 70197 Stuttgart (DE)

(57) **Zusammenfassung**

Die vorliegende Erfindung betrifft ein Verfahren zum Betreiben eines Elektrofahrrads, wobei das Elektrofahrrad zumindest einen Unterstützungsmodus für zumindest einen Betriebszustand aufweist, umfassend die Schritte: Ermitteln des Betriebszustands des Elektrofahrrads, Ermitteln, ob der zumindest eine Unterstützungsmodus anwendbar ist, Ermitteln, ob der Unterstützungsmodus aktiviert ist, und Anzeigen einer Information an den Nutzer über den zumindest einen dem Betriebszustand zugeordneten Unterstützungsmodus, falls der Unterstützungsmodus deaktiviert und anwendbar ist.

## Beschreibung

### Stand der Technik

Die vorliegende Erfindung betrifft ein Verfahren zum Betreiben eines Elektrofahrrads, und ein Elektrofahrrad.

Bekannt sind Elektrofahrräder, welche eine Vielzahl an Betriebsfunktionen aufweisen. Derartige Betriebsfunktionen umfassen häufig verschiedene Unterstützungsmodi der Antriebseinheit des Elektrofahrrads. Zudem sind Elektrofahrräder bekannt, welche zusätzlich zur Motorunterstützung weitere Unterstützungsmodi umfassen, die das Fahren unterstützen können. Bekannt sind beispielsweise Schiebehilfen, welche eine Erzeugung eines Motormoments umfassen, während der Fahrer das Elektrofahrrad schiebt. Außerdem bekannt sind Navigationsfunktionen.

### Offenbarung der Erfindung

Das erfindungsgemäße Verfahren mit den Merkmalen des Anspruchs 1 zeichnet sich dadurch aus, dass eine Vielzahl an verschiedenen Betriebsfunktionen eines Elektrofahrrads mit besonders hohem Nutzerkomfort bereitgestellt werden kann. Insbesondere kann dabei mit einfachen und kostengünstigen Mitteln eine automatisierte Überprüfung und Bereitstellung der Betriebsfunktionen ermöglicht werden. Dies wird erfindungsgemäß erreicht durch ein Verfahren zum Betreiben eines Elektrofahrrads, wobei das Elektrofahrrad zumindest einen Unterstützungsmodus für zumindest einen Betriebszustand aufweist. Das Verfahren umfasst die Schritte:
- Ermitteln des momentanen Betriebszustands des Elektrofahrrads,
- Ermitteln, ob der zumindest eine Unterstützungsmodus anwendbar ist,
- Ermitteln, ob der Unterstützungsmodus aktiviert ist, und
- Anzeigen einer Information an den Nutzer, falls der Unterstützungsmodus deaktiviert und anwendbar ist.

Als Betriebszustand wird insbesondere ein tatsächlicher momentaner Ist-Zustand einer Situation, in der das Elektrofahrrad momentan betrieben wird, angesehen. Vorzugsweise wird als Betriebszustand eine Bewegung des Elektrofahrrads relativ zu einer Umgebung und/oder ein Funktionszustand einer Funktion von mindestens einer Komponente des Elektrofahrrads und/oder eine Interaktion des Nutzers mit dem Elektrofahrrad angesehen.

Als Unterstützungsmodus wird vorzugsweise eine vordefinierte Funktion und/oder Betriebsweise des Elektrofahrrads und/oder einer Komponente des Elektrofahrrads angesehen.

Als Unterstützungsmodus wird ein bestimmter Unterstützungsmodus angesehen, welcher bevorzugt nur in Zusammenhang mit dem bestimmten Betriebszustand ausgeführt werden kann. Vorzugsweise können einem bestimmten Betriebszustand auch mehrere Unterstützungsmodi zugeordnet sein. Das heißt, ein bestimmter Betriebszustand ist eine notwendige Voraussetzung, um einen bestimmten Unterstützungsmodus ausführen zu können.

Das Ermitteln, ob der Unterstützungsmodus anwendbar ist, umfasst vorzugsweise ein Erkennen vorbestimmter Voraussetzungen des Betriebszustands speziell für den Unterstützungsmodus. Insbesondere erfolgt das Ermitteln, ob der Unterstützungsmodus anwendbar ist, sensorbasiert, bevorzugt, wenn erfasste Sensordaten innerhalb vorbestimmter Wertebereiche liegen.

Weiter bevorzugt erfolgt, das Ermitteln, ob der Unterstützungsmodus aktiviert ist, basierend auf einem Erkennen eines Aktivierungssignals, welches insbesondere erzeugt wird, wenn der Unterstützungsmodus aktiviert ist.

Mit anderen Worten erfolgt bei dem Verfahren eine Erkennung, in welchem Betriebszustand das Elektrofahrrad sich momentan befindet und zudem eine Erkennung, ob der Nutzer des Elektrofahrrads momentan einen in diesem Betriebszustand zur Verfügung stehenden Unterstützungsmodus nutzt. Wenn der Nutzer den Unterstützungsmodus nicht nutzt, und wenn erkannt wurde, dass der Unterstützungsmodus anwendbar ist, wird dem Nutzer automatisch eine Information darüber angezeigt, dass der zumindest eine Unterstützungsmodus zur Verfügung steht und insbesondere aktiviert werden kann.

Das Verfahren bietet somit den Vorteil, dass auf einfache Weise eine automatische Analyse des Betriebs des Elektrofahrrads dahingehend ermöglicht werden kann, und dass eine tatsächliche Nutzung potenzieller Unterstützungsfunktionen des Elektrofahrrads überprüft wird. Die so gewonnenen Informationen können auf vielfältige Weise genutzt werden. So können dem Nutzer gezielt Informationen über die Nutzung oder über ein zur Verfügung stehen und eine Anwendbarkeit von Unterstützungsmodi bereitgestellt werden. Durch die Anzeige der Information an den Nutzer kann ein besonders hoher Nutzerkomfort für den Nutzer des Elektrofahrrads bereitgestellt werden. Insbesondere kann dabei ermöglicht werden, dass eine besonders hohe Anzahl an Unterstützungsmodi für verschiedenste Betriebszustände des Elektrofahrrads bereitgestellt werden können. Durch die automatische Ausgabe der Information an den Nutzer über die jeweils zur Verfügung stehenden und anwendbaren Unterstützungsmodi kann somit besonders einfach und übersichtlich der Nutzer über einen beispielsweise unterstützenden Unterstützungsmodus informiert werden. Weiterhin kann durch Kenntnis der Nutzung der möglichen Unterstützungsmodi in Abhängigkeit der Betriebszustände ein besonders gezielter automatischer Betrieb des Elektrofahrrads ermöglicht werden, um eine besonders hohe Effizienz des Elektrofahrrads beim Betrieb bereitstellen zu können. Dadurch, dass zudem die Information nur angezeigt wird, wenn der Unterstützungsmodus anwendbar ist, wird diese nur bei entsprechender Relevanz angezeigt. Das heißt, eine die Anzeige der Informationen kann besonders gezielt erfolgen.

Die Unteransprüche haben bevorzugte Weiterbildungen der Erfindung zum Inhalt.

Vorzugsweise umfasst das Verfahren ferner den Schritt: Bereitstellen einer Aktivierungsabfrage zur Aktivierung des zumindest einen dem Betriebszustand zugeordneten Unterstützungsmodus. Bevorzugt wird die Aktivierungsabfrage mittels einer Ausgabeeinheit bereitgestellt. Als Aktivierungsabfrage wird dabei ein akustisch und/oder visuell und/oder haptisch an den Nutzer ausgebbarer Hinweis angesehen, welcher gezielt eine unmittelbare Aktivierbarkeit des entsprechenden Unterstützungsmodus an den Nutzer des Elektrofahrrads anbietet. Das heißt, beispielsweise kann dem Nutzer gezielt, vorzugsweise mittels eines Displays, die Frage gestellt werden, ob der bestimmte zur Verfügung stehende Unterstützungsmodus aktiviert werden soll. Dadurch kann automatisch auf für den Nutzer besonders einfache und komfortable Weise direkt einer oder mehrere der in bestimmten Betriebszuständen zur Verfügung stehenden Unterstützungsmodi des Elektrofahrrads zur unmittelbaren Durchführung angeboten werden. Vorzugsweise kann dabei eine Aktivierung dieses entsprechenden, mittels der Aktivierungsabfrage bereitgestellten Unterstützungsmodus durch einfache Betätigung, beispielsweise eines Knopfes, bestätigt werden. Somit können ein besonders hoher Nutzerkomfort und ein effizienter Betrieb des Elektrofahrrads bereitgestellt werden.

Weiter bevorzugt umfasst das Verfahren ferner den Schritt: Aktivieren des Unterstützungsmodus im Ansprechen auf ein Erkennen einer Bestätigung der Aktivierungsabfrage durch den Nutzer. Vorzugsweise ist die Aktivierungsabfrage durch Betätigung einer Eingabeeinheit bestätigbar. Vorzugsweise umfasst die Eingabeeinheit einen Taster oder einen Touchscreen oder dergleichen. Das heißt, der mittels der Aktivierungsabfrage angebotene und anwendbare Unterstützungsmodus kann durch einfache Bestätigung durch den Nutzer unmittelbar aktiviert werden. Damit kann ein besonders einfacher und effizienter sowie komfortabler Betrieb des Elektrofahrrads ermöglicht werden. So muss der Nutzer beispielsweise nicht in einem Menü einen gewünschten Unterstützungsmodus beispielsweise aus einer Vielzahl an verfügbaren Unterstützungsmodi suchen und auswählen, sondern kann direkt genau einen oder wenige speziell im momentanen Betriebszustand verfügbaren Unterstützungsmodus auswählen.

Vorzugsweise umfasst das Anzeigen der Information ein Anzeigen einer Aktivierungsanweisung für den Nutzer zum Aktivieren des zumindest einen dem Betriebszustand zugeordneten Unterstützungsmodus. Als Aktivierungsanweisung wird insbesondere eine Handlungsanweisung an den Nutzer angesehen, welche vorzugsweise eine Information über zumindest einen Handlungsschritt aufweist, den der Nutzer durchführen kann, um dadurch den entsprechenden Unterstützungsmodus zu aktivieren. Mit anderen Worten wird im Ansprechen auf das automatische Erkennen, dass ein bestimmter Unterstützungsmodus zur Verfügung stehen würde, dem Nutzer automisch mitgeteilt, beispielsweise grafisch und/oder mit einem Hinweistest, welche Handlung(en) der Nutzer vornehmen muss, um den Unterstützungsmodus zu aktivieren. Damit kann auf automatische Weise ein besonders hoher Nutzerkomfort für den Nutzer bereitgestellt werden.

Bevorzugt umfasst das Verfahren ferner den Schritt: Deaktivieren der Anzeige der Information im Ansprechen auf das Aktivieren des Unterstützungsmodus. Das heißt, wenn ein bestimmter Unterstützungsmodus aktiviert wird, wird anschließend automatisch die entsprechende Anzeige der Information deaktiviert bzw. beendet. Damit können beispielsweise zur Verfügung stehende Anzeigemöglichkeiten gleich nach dem erfolgten Anwenden des Unterstützungsmodus wieder für andere Informationen verwendet werden.

Vorzugsweise wird das Anzeigen der Information über einen bestimmten Unterstützungsmodus verhindert, wenn in einem aktuellen Fahrzyklus des Elektrofahrrads die Information bereits einmal angezeigt wurde und/oder wenn in dem aktuellen Fahrzyklus des Elektrofahrrads der bestimmte Unterstützungsmodus bereits mindestens einmal aktiviert wurde. Alternativ oder zusätzlich bevorzugt wird das Anzeigen der Information über einen bestimmten Unterstützungsmodus verhindert, wenn der Nutzer dies manuell deaktiviert hat. Als aktueller Fahrzyklus wird ein momentan laufender Betrieb des Elektrofahrrads angesehen zwischen einem Betriebsstart und einem Betriebsende. Mit anderen Worten wird somit das Anzeigen der Information gesteuert aktiv verhindert, wenn die Information bereits einmal oder alternativ bevorzugt eine bestimmen Anzahl an Malen angezeigt wurde und/oder wenn der Unterstützungsmodus bereits aktiviert wurde. Damit kann eine unnötige Anzeige der Information vermieden werden, da der Nutzer insbesondere bereits über den Unterstützungsmodus informiert wurde und/oder diesen verwendet hat.

Weiter bevorzugt wird das Ermitteln, ob der zumindest eine Unterstützungsmodus anwendbar ist, frühestens nach Ablauf einer vorbestimmten Start-Zeitspanne, von beispielsweise mindestens 1s, nach einem Betriebsstart des Elektrofahrrads durchgeführt. Damit kann eine besonders zuverlässige genaue Durchführung des Verfahrens ermöglicht werden, da beispielsweise ein Initialisieren und Einschwingen des Systems, beispielsweise von Sensoren und Filtern, ermöglicht wird.

Vorzugsweise ist der Unterstützungsmodus anwendbar, wenn, insbesondere jeweils für mindestens eine vorbestimmte Zeitspanne, von beispielsweise mindestens 0,5s, ein Trittfrequenz-freier Zustand und/oder ein Motorstillstands-Zustand erkannt wurde. Vorzugsweise erfolgt die Erkennung des Trittfrequenzfreien Zustands mittels eines Tret-Sensors des Elektrofahrrads, welcher insbesondere eingerichtet ist zur Erfassung einer Trittfrequenz. Bevorzugt wird als Trittfrequenz-freier Zustand ein Zustand angesehen, wenn im Wesentlichen keine Tretbewegung erkannt wurde, das heißt insbesondere Trittfrequenz von 0 U/min oder vorzugsweise maximal 3 U/min. Bevorzugt erfolgt die Erkennung des Motorstillstands-Zustands mittels eines Motorsensors, welcher eingerichtet eine Motordrehzahl und/oder eine Motor-Betätigung zu erfassen. Insbesondere wird als Motorstillstands-Zustand ein Zustand angesehen, in welchem, vorzugsweise im Kettenblatt-Bereich, eine Motor-bedingte Drehzahl maximal 10 U/min beträgt und/oder ein Drehmoment maximal 5Nm beträgt. Somit erfolgt das Bereitstellen und Anzeigen des Unterstützungsmodus nur in bestimmten Situationen, nämlich wenn der Fahrer nicht pedaliert und/oder wenn der Motor sich nicht dreht. Bevorzugt umfasst ein Betriebszustand ein Schieben des Elektrofahrrads. Dabei umfasst ein entsprechender Unterstützungsmodus, welcher während des Schiebens ausführbar ist, eine Schiebehilfe. Das heißt, bei dem Verfahren wird als momentaner Betriebszustand ein Schieben des Elektrofahrrads durch den Nutzer erkannt. Die Schiebehilfe ist vorzugsweise der einzige mögliche Unterstützungsmodus während des Schiebens, oder alternativ bevorzugt einer von mehreren möglichen Unterstützungsmodi während des Schiebens. Dabei wird bei dem Verfahren ermittelt, ob der Nutzer die Schiebehilfe während des Schiebens gezielt nutzt, das heißt manuell aktiviert hat. Im Falle des Nichtnutzens wird dem Nutzer die Aktivierungsabfrage zur möglichen Aktivierung der Schiebehilfe bereitgestellt.

Vorzugsweise ist die Schiebehilfe anwendbar, wenn eine Steigung, insbesondere größer als Null, eine vorbestimmte Maximal-Geschwindigkeit und/oder ein Tretmoment-freier Zustand und/oder ein Schiebezustand des Elektrofahrrads und/oder Vorwärts-Schieben aus einem Stillstand erkannt wurde. Bevorzugt erfolgt die Erkennung der Steigung mittels eines Neigungssensors des Elektrofahrrads, insbesondere wenn eine erfasste Neigung des Elektrofahrrads relativ zu einer Horizontalen mindestens 3 Grad, vorzugsweise mindestens 5 Grad, beträgt. Insbesondere erfolgt die Erkennung der Maximal-Geschwindigkeit mittels eines Geschwindigkeitssensors des Elektrofahrrads. Bevorzugt beträgt die Maximal-Geschwindigkeit 6 km/h. Vorzugsweise erfolgt die Erkennung des Tretmoment-freien Zustands mittels eines Tret-Sensors des Elektrofahrrads, welcher insbesondere eingerichtet ist zur Erfassung eines Tretmoments und/oder einer Trittfrequenz. Bevorzugt wird als Tretmoment-freier Zustand ein Zustand angesehen, wenn im Wesentlichen kein Tretmoment und/oder keine Tretbewegung erkannt wurde, das heißt insbesondere ein Tretmoment von 0 Nm und/oder eine Trittfrequenz von 0 U/min. Weiter bevorzugt erfolgt die Erkennung des Schiebezustands basierend auf zumindest einem Sensor. Beispielsweise erfolgt die Erkennung des Schiebezustands basierend auf einer Erfassung einer Schubkraft, die der Nutzer auf das Elektrofahrrad ausübt.

Weiter bevorzugt umfasst ein Betriebszustand ein Berganfahren des Elektrofahrrads. Ein entsprechender Unterstützungsmodus umfasst dabei eine Berganfahrhilfe. Als Berganfahren wird dabei insbesondere ein Anfahren des Elektrofahrrads aus einem Stillstand und an einer Steigung bergauf angesehen. Das heißt, bei dem Verfahren wird erkannt, dass der Nutzer ein Berganfahren des Elektrofahrrads durchführt oder durchführen wird. Als Berganfahrhilfe wird eine gezielte Motorunterstützung während des Anfahrens angesehen. Bevorzugt kann hierbei die Antriebseinheit des Elektrofahrrads gezielt ein Motormoment erzeugen, um beispielsweise ein Halten des Elektrofahrrads an der Steigung zu bewirken und/oder ein gezieltes Motormoment erzeugen, um den Anfahrvorgang zu unterstützen. Vorzugsweise ist die Berganfahrhilfe der einzige mögliche Unterstützungsmodus während des Berganfahrens, oder alternativ bevorzugt einer von mehreren Unterstützungsmodi während des Berganfahrens.

Vorzugsweise ist die Berganfahrhilfe anwendbar, wenn eine Steigung und/oder ein vorbestimmtes Mindest-Tretmoment und/oder ein Stillstand und/oder eine Fahrradgeschwindigkeit kleiner als ein vorbestimmter Schwellwert, von vorzugsweise 6 km/h, erkannt wurde. Bevorzugt erfolgt die Erkennung der Steigung mittels eines Neigungssensors des Elektrofahrrads, insbesondere wenn eine erfasste Neigung des Elektrofahrrads relativ zu einer Horizontalen mindestens 3 Grad, vorzugsweise mindestens 5 Grad, beträgt. Vorzugsweise wird das vorbestimmte Mindest-Tretmoment mittels eines Tret-Sensors des Elektrofahrrads erfasst, welcher insbesondere eingerichtet ist zur Erfassung eines Tretmoments. Insbesondere beträgt das Mindest-Tretmoment mindestens 10 Nm, bevorzugt mindestens 30 Nm. Bevorzugt erfolgt das Erkennen des Stillstands basierend auf einer Geschwindigkeit des Elektrofahrrads, insbesondere wenn diese gleich Null ist, oder kleiner als ein vorbestimmter Schwellwert, von vorzugsweise 6 km/h, ist. Vorzugsweise wird die Geschwindigkeit mittels eines Geschwindigkeitssensors und/oder eines Navigationssystems des Elektrofahrrads erfasst.

Weiter bevorzugt umfasst ein Betriebszustand einen Navigationsbetrieb des Elektrofahrrads. Dabei umfasst ein entsprechender Unterstützungsmodus eine Reichweitensteuerung. Als Navigationsbetrieb wird dabei angesehen, dass mittels eines Navigationssystems des Elektrofahrrads während eines Fahrbetriebs Navigationsinformationen an den Nutzer ausgegeben werden. Als Reichweitensteuerung wird dabei angesehen, dass gezielt in Abhängigkeit der momentanen Navigationsinformationen des Navigationssystems unterschiedliche Navigationsrouten und/oder Unterstützungsfaktoren der Antriebseinheit des Elektrofahrrads bereitgestellt werden. Das heißt, mittels der Reichweitensteuerung kann dem Nutzer in Abhängigkeit von beispielsweise Länge der Fahrstrecke und/oder Profil der Fahrtstrecke eine gezielte automatische Unterstützung bereitgestellt werden, um einen möglichst effizienten Fahrbetrieb des Elektrofahrrads zu ermöglichen. Bevorzugt ist die Reichweitensteuerung der einzige mögliche Unterstützungsmodus während des Navigationsbetriebs, oder alternativ bevorzugt einer von mehreren möglichen Unterstützungsmodi.

Besonders bevorzugt umfasst das Verfahren ferner den Schritt: Abschätzen einer Auswirkung der Reichweitensteuerung auf einen Motorunterstützungs-Betrieb des Elektrofahrrads. Die Reichweitensteuerung ist dabei anwendbar, wenn eine vorbestimmte Auswirkung der Reichweitensteuerung auf den Motorunterstützungsbetrieb erkannt wurde. Insbesondere erfolgt das Erkennen einer Auswirkung der Reichweitensteuerung auf den Motorunterstützungsbetrieb dabei, wenn basierend auf dem Abschätzen erkannt wird, dass die Reichweitensteuerung aktiv die Motorunterstützung steuert bei einer prognostizierten Fahrt entlang einer zu befahrenden Strecke, im Vergleich zu einer prognostizierten Fahrt entlang derselben Strecke ohne Reichweitensteuerung. Das heißt, wenn abgeschätzt wird, dass zukünftig bei der zu befahrenden Strecke eine aktive Reichweitensteuerung die Motorunterstützung gezielt anpassen würde, wird die Reichweitensteuerung als anwendbar erkannt. Somit kann ermöglicht werden, dass die Information über die zur Verfügung stehende Reichweitensteuerung nur bei erkannter Relevanz angezeigt wird.

Bevorzugt umfasst ein Betriebszustand ein Berghalten des Elektrofahrrads. Ein entsprechender Unterstützungsmodus umfasst dabei eine Berghaltehilfe. Als Berghalten wird insbesondere ein Betriebszustand angesehen, bei welchem das Elektrofahrrad an einer Steigung im Stillstand gehalten wird, beispielsweise mittels eines Antriebsmoments und/oder einer Bremsbetätigung. Als Berghaltehilfe wird dabei ein Unterstützungsmodus der Antriebseinheit angesehen, in welchem gezielt ein Motormoment erzeugt wird, mittels welchem das Elektrofahrrad im Stillstand an der Steigung gehalten wird. Vorzugsweise ist die Berghaltehilfe der einzige zur Verfügung stehende Unterstützungsmodus während des Betriebszustands Berghalten, oder alternativ bevorzugt einer von mehreren möglichen Unterstützungsmodi. Bevorzugt ist das Berghalten anwendbar, wenn sensorbasiert eine Steigung erkannt wurde.

Besonders bevorzugt erfolgt das Bereitstellen der Information an den Nutzer über den zumindest einen dem Betriebszustand zugeordneten Unterstützungsmodus mittels einer Ausgabeeinheit akustisch und/oder visuell und/oder haptisch. Besonders bevorzugt umfasst die Ausgabeeinheit ein Display, mittels welchem die Information angezeigt werden kann. Damit kann dem Nutzer besonders gezielt und einfach und leicht verständlich die Verfügbarkeit von zumindest einen möglichen Unterstützungsmodus übermittelt werden.

Besonders bevorzugt erfolgt das Bereitstellen der Information an den Nutzer über den zumindest einen dem Betriebszustand zugeordneten Unterstützungsmodus mittels eines Nutzergeräts akustisch und/oder visuell und/oder haptisch. Insbesondere kann das Nutzergerät ein Smartphone des Nutzers sein.

Vorzugsweise erfolgt das Ermitteln des momentanen Betriebszustands des Elektrofahrrads und/oder das Ermitteln, ob der zumindest eine Unterstützungsmodus anwendbar ist, und/oder das Ermitteln, ob der zumindest eine Unterstützungsmodus aktiviert ist, basierend auf Sensordaten von zumindest einem Sensor. Das heißt, mittels des Sensors kann der momentane Betrieb des Elektrofahrrads überwacht werden, und basierend darauf ermittelt werden, ob einer der zur Verfügung stehende Unterstützungsmodi anwendbar ist und/oder in einem der speziellen Betriebszustände des Elektrofahrrads momentan von dem Fahrer aktiv genutzt wird. Das Ermitteln, ob der Nutzer des Elektrofahrrads zumindest einen entsprechenden Unterstützungsmodus nutzt, kann alternativ bevorzugt durch eine Steuereinheit des Elektrofahrrads durchgeführt werden.

Weiterhin führt die Erfindung zu einem Elektrofahrrad, umfassend eine Steuereinheit, welche eingerichtet ist zur Durchführung des beschriebenen Verfahrens.

### Kurze Beschreibung der Zeichnungen

Nachfolgend wird ein Ausführungsbeispiel der Erfindung unter Bezugnahme auf die begleitenden Zeichnungen im Detail beschrieben. In der Zeichnung ist:
- Figur 1: eine vereinfachte schematische Ansicht eines Elektrofahrrads, bei dem ein Verfahren zum Betreiben des Elektrofahrrads gemäß einem bevorzugten Ausführungsbeispiel der Erfindung durchgeführt wird, und
- Figur 2: eine stark vereinfachte schematische Ansicht des erfindungsgemäßen Verfahrens.

### Ausführungsformen der Erfindung

Bevorzugt sind alle gleichen Bauteile, Elemente und/oder Einheiten in allen Figuren mit den gleichen Bezugszeichen versehen.

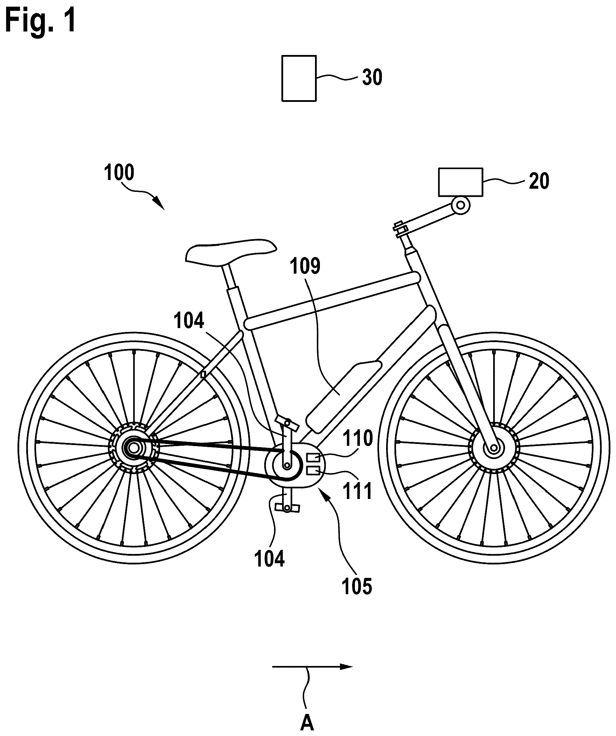

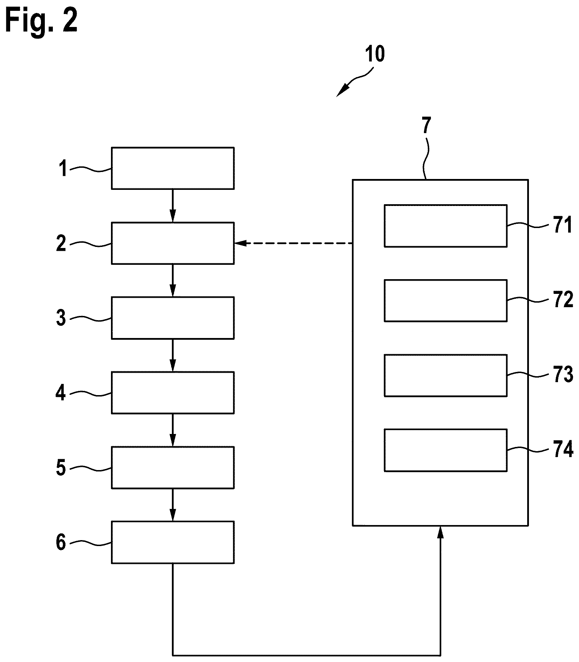

Figur 1 zeigt eine vereinfachte schematische Ansicht eines Elektrofahrrads 100, bei dem ein Verfahren 10 zum Betreiben des Elektrofahrrads 100 gemäß einem bevorzugten Ausführungsbeispiel der Erfindung durchgeführt wird. In Figur 2 ist eine stark vereinfachte schematische Ansicht des erfindungsgemäßen Verfahrens 10 dargestellt.

Das Elektrofahrrad 100 umfasst eine Antriebseinheit 105 mit einem Motor, der insbesondere ein Elektromotor ist. Der Motor kann mittels eines elektrischen Energiespeichers 109 des Elektrofahrrads 100 mit elektrischer Energie versorgt werden. Durch ein mittels des Motors erzeugten Motormoments kann eine durch Muskelkraft erzeugte Tretkraft eines Fahrers des Elektrofahrrads 100 motorisch unterstützt werden. Die Muskelkraft des Fahrers kann dabei über einen Kurbeltrieb mit Kurbeln 104 aufgebracht werden.

Die Antriebseinheit 105 umfasst eine Steuereinheit 110, welche eingerichtet ist, um den Motor gesteuert zu betätigen. Beispielsweise kann die Steuereinheit 110 einen Betätigungsstrom zum Betätigen des Motors steuern.

Ferner ist die Steuereinheit 110 eingerichtet zur Durchführung des erfindungsgemäßen Verfahrens 10.

Das Elektrofahrrad 100 umfasst ferner einen Sensor 111, welcher beispielsweise in die Antriebseinheit 105 integriert ist. Basierend auf Sensordaten des Sensors 111 kann die Steuereinheit 110 Betriebszustände des Elektrofahrrads 100 erfassen und überwachen. Beispielsweise umfasst der Sensor 111 zumindest einen Beschleunigungssensor.

Alternativ oder zusätzlich bevorzugt können weiteres Sensoren vorgesehen sein, mit denen eine Trittfrequenz, eine Motordrehzahl und eine Fahrradgeschwindigkeit erfasst werden können.

Zudem umfasst das Elektrofahrrad 100 eine Ausgabeeinheit 20, welche vorzugsweise ein Display zur visuellen Ausgabe von Informationen an den Nutzer des Elektrofahrrads 100 umfasst. Bevorzugt kann die Ausgabeeinheit 20 als Aus- und/oder Eingabeeinheit ausgebildet sein, und zusätzlich ein Eingabeelement, wie beispielsweise einen Taster und/oder einen Touchscreen, umfassen. Damit kann der Nutzer Eingaben tätigen.

Bei dem Verfahren 10 erfolgt zunächst ein Ermitteln 1 eines momentanen Betriebszustands des Elektrofahrrads 100. Das Ermitteln 1 erfolgt dabei basierend auf den Sensordaten des Sensors 111 und mittels der Steuereinheit 110.

Als Betriebszustände werden vorzugsweise ein normaler Fahrbetrieb des Elektrofahrrads 100, ein Schieben, ein Berganfahren, ein Berghalten, und ein Navigationsbetrieb des Elektrofahrrads 100 erkannt und unterschieden.

Vorzugsweise können zudem weitere Betriebszustände erkannt und unterschieden werden. Beispielsweise kann das Ermitteln 1 des momentanen Betriebszustands dabei mittels einer Mustererkennung anhand der Sensordaten des Sensor 111 erfolgen.

Weiterhin erfolgt bei dem Verfahren 10 ein Ermitteln 2, ob zumindest ein Unterstützungsmodus 7, der dem ermittelten Betriebszustand zugeordnet ist, anwendbar ist. Vorzugsweise erfolgt das Ermitteln 2, ob der Unterstützungsmodus 7 anwendbar ist, mittels einer bevorzugt sensorbasierten Überprüfung vorbestimmter Voraussetzungen des Unterstützungsmodus 7, beispielsweise durch Vergleich erfasster Sensordaten mit vorbestimmten Werten.

Als Unterstützungsmodus 7 werden dabei mehrere verschiedene Unterstützungsmodi angesehen, welche später beschrieben werden. Bevorzugt ist jeder Unterstützungsmodus 7 genau einem bestimmten Betriebszustand des Elektrofahrrads 100 zugeordnet. Alternativ bevorzugt kann ein Unterstützungsmodus auch mehreren verschiedenen Betriebszuständen zugeordnet sein. Weiter bevorzugt können mehrere verschiedene Unterstützungsmodi genau einem bestimmten Betriebszustand zugeordnet sein.

Anschließen erfolgt ein Ermitteln 3, ob der Unterstützungsmodus 7 aktiviert ist, das heißt insbesondere, ob der Nutzer der Unterstützungsmodus 7 nutzt.

Nach dem Ermitteln 3 erfolgt ein Bereitstellen 4 einer Information an den Nutzer des Elektrofahrrads 100 über den zumindest einen dem Betriebszustand zugeordneten Unterstützungsmodus 7, falls der Unterstützungsmodus 7 deaktiviert und anwendbar ist.

Bevorzugt erfolgt das Anzeigen 4 der Information dabei im Ansprechen auf ein Ermitteln einer Nichtnutzung eines möglichen Unterstützungsmodus 7. Das heißt, wenn ein bestimmter Betriebszustand des Elektrofahrrads 100 ermittelt wurde, und wenn ermittelt wurde, dass ein entsprechender Unterstützungsmodus 7 anwendbar ist, werden dem Nutzer mittels der Ausgabeeinheit 20 Informationen über das Vorhandensein von einem oder mehreren bestimmten Unterstützungsmodi 7, welche in diesem Betriebszustand zur Verfügung stehen, angezeigt.

Das Anzeigen 4 der Information über einen bestimmten Unterstützungsmodus 7 erfolgt dabei nur, wenn in einem momentanen Fahrzyklus des Elektrofahrrads 100 die Information über diesen bestimmten Unterstützungsmodus 7 noch nie angezeigt wurde und wenn dieser bestimmte Unterstützungsmodus 7 im momentanen Fahrzyklus auch noch nie aktiviert war. Dadurch kann eine nicht notwendige Information, nämlich wenn der Nutzer bereits zuvor informiert wurde oder den Unterstützungsmodus 7 bereits aktiviert hatte, vermieden werden.

Weiterhin kann das Anzeigen 4 der Information gezielt gesteuert verhindert werden, beispielsweise im Ansprechen auf eine manuelle Deaktivierung dieser Funktion durch den Nutzer.

Gleichzeitig zum Bereitstellen 4 der Information erfolgt ein Bereitstellen 5 einer Aktivierungsabfrage an den Nutzer. Die Aktivierungsabfrage umfasst eine Abfrage zur Aktivierung des zumindest einen dem Betriebszustand zugeordneten Unterstützungsmodus 7. Das heißt, als Aktivierungsabfrage wird dem Nutzer mittels der Ausgabeeinheit 20 eine Frage übermittelt, ob er den zur Verfügung stehenden Unterstützungsmodus 7, oder einen der zur Verfügung stehenden Unterstützungsmodi 7, aktiveren möchte.

Sofern der Nutzer keinerlei Eingabe tätigt, das heißt die Aktivierungsabfrage nicht bestätigt, so wird anschließend keine Funktion ausgeführt, das heißt keiner der möglichen Unterstützungsmodi 7 wird gestartet. Bevorzugt bleibt die Aktivierungsabfrage dabei bestehen, solang das Elektrofahrrad 100 sich in dem momentanen entsprechenden Betriebszustand befindet.

Sofern der Nutzer die Aktivierungsabfrage bestätigt, erfolgt unmittelbar im Ansprechen auf das Erkennen der Bestätigung der Aktivierungsabfrage ein Aktivieren 6 des entsprechenden bestätigten Unterstützungsmodus 7.

Das Bestätigen der Aktivierungsabfrage kann dabei vorzugsweise durch manuelle Betätigung der Eingabeeinheit der Ausgabeeinheit 20 erfolgen. Das heißt, beispielsweise kann der Nutzer mittels eines Knopfdruckes die Aktivierungsabfrage bestätigen.

Alternativ oder zusätzlich bevorzugt zur Aktivierungsabfrage wird eine Aktivierungsanweisung für den Nutzer angezeigt, welche Handlungsanweisungen ausgibt, mittels welchen der Nutzer den bestimmten Unterstützungsmodus 7 aktivieren kann. Beispielsweise kann dabei ein Hinweis angezeigt werden, wie der Nutzer das Elektrofahrrad 100 betätigen muss, beispielsweise schieben oder im Stillstand ein Tretmoment erzeugen bei gleichzeitig Betätigung einer bestimmten Taste, um den Unterstützungsmodus 7 zu aktivieren.

Das Verfahren 10 bietet damit den Vorteil, dass ein besonders hoher Nutzerkomfort und Bedienkomfort für den Nutzer des Elektrofahrrads 100 bereitgestellt werden kann. Dabei wird automatisch ermittelt, in welchen bestimmten Betriebszuständen des Elektrofahrrads 100 genau welche Unterstützungsmodi zur Verfügung stehen und anwendbar sind, und diese werden dem Nutzer explizit zur Aktivierung angeboten, falls diese momentan deaktiviert und anwendbar sind. Dadurch kann eine besonders einfache Bedienung des Elektrofahrrads 100 für den Nutzer ermöglicht werden, wodurch dieser insbesondere auch bei einer Vielzahl an möglichen zur Verfügung stehenden Unterstützungsmodi gezielt auf diese aufmerksam gemacht werden kann. Hierbei werden dem Nutzer nur relevante Informationen angezeigt, das heißt, wenn beispielsweise keine Anwendbarkeit erkannt wurde, wird die Information auch nicht angezeigt. Zudem kann ein besonders einfacher und zeiteffizienter Betrieb des Elektrofahrrads 100 ermöglicht werden. So ist beispielsweise keine aufwendige Auswahl eines bestimmten Unterstützungsmodus 7 in einem Menü der Ausgabeeinheit 20 der dergleichen erforderlich, sondern es kann direkt beispielsweise mit einfachem Knopfdruck der zur Verfügung stehende Unterstützungsmodus 7 gewählt werden.

Als Unterstützungsmodi 7 stehen dabei eine Schiebehilfe 71, eine Berganfahrhilfe 72, eine Berghaltehilfe 73, und eine Reichweitensteuerung 74 zur Verfügung. Bevorzugt können auch weitere nicht genannte Unterstützungsmodi 7 zur Verfügung stehen.

Das Anzeigen 3 der Information über einen Unterstützungsmodus 7 erfolgt dabei, vorzugsweise für sämtliche Unterstützungsmodi 7 nur, wenn die folgenden Bedingungen erfüllt sind: Das Elektrofahrrad 100 ist mindestens für eine vorbestimmte Start-Zeitspanne nach einem Betriebsstart aktiv; keiner der Unterstützungsmodi 7 ist aktiv; das Elektrofahrrad 100 befindet sich an einer Steigung, vorzugsweise basierend auf Sensordaten einer Inertialmesseinheit und einer Sensordatenfusion erkannt; ein Trittfrequenz-freier Zustand liegt vor; und ein Motorstillstands-Zustand liegt vor.

Die Schiebehilfe 71 ist dabei einem Betriebszustand des Elektrofahrrads 100 zugeordnet, welcher ein Schieben des Elektrofahrrads 100 umfasst. Das heißt, wenn basierend auf den Sensordaten erkannt wurde, dass das Elektrofahrrad 100 von dem Nutzer geschoben wird, erfolgt mittels der Anzeigeeinheit 20 ein Bereitstellen 3 einer Information über die Schiebehilfe sowie ein Bereitstellen 4 einer Aktivierungsabfrage und/oder einer Aktivierungsanweisung für die Schiebehilfe 71, wenn zusätzlich ermittelt wurde, dass die Schiebehilfe 71 anwendbar ist. Das Ermitteln 2, ob die Schiebehilfe 71 anwendbar ist, erfolgt beispielsweise basierend auf einer Erfassung eines Schiebezustands in Fahrtrichtung, welcher insbesondere erkannt wird basierend auf einer Erfassung einer vorbestimmten Maximal-Geschwindigkeit, insbesondere von maximal 2,5 km/h, und gleichzeitig einer Erfassung einer vorbestimmten Mindest-Beschleunigung in Fahrtrichtung, insbesondere von mindestens 0,75 m/s². Alternativ bevorzugt kann der Schiebezustand erkannt werden, wenn ein Pulssignal eines Geschwindigkeitssensors erfasst wird, während der Motor nicht rückwärts dreht. Weiterhin wird die Schiebehilfe als anwendbar ermittelt, wenn die momentane Fahrradgeschwindigkeit kleiner als eine vorbestimmte Maximal-Schiebegeschwindigkeit, von insbesondere 6 km/h ist, und wenn ein zumindest im Wesentlichen Tretmoment-freier Zustand vorliegt, insbesondere in welchen ein Tretmoment von maximal 5 Nm für mindestens 1s vorliegt.

Analog erfolgt das Erkennen der weiteren Unterstützungsmodi 7 und das Bereitstellen 3 und 4 der entsprechenden Informationen bzw. Aktivierungsabfragen und/oder Aktivierungsanweisungen.

Die Berganfahrhilfe 72 ist dabei einem Betriebszustand zugeordnet, welcher ein Berganfahren des Elektrofahrrads 100 umfasst. Das Berganfahren wird dabei erkannt, wenn das Elektrofahrrad 100 im Stillstand an einer Steigung steht und ein Anfahrvorgang bevorsteht. Die Berganfahrhilfe 72 ist beispielsweise anwendbar, wenn ein vorbestimmtes Mindest-Tretmoment, von vorzugsweise mindestens 25 Nm für eine Dauer von mindestens 0,5s, und/oder ein Stillstand des Elektrofahrrads 100 und/oder eine vorbestimmte Maximal-Geschwindigkeit des Elektrofahrrads 100, welche vorzugsweise maximal 6 km/h beträgt, sensorbasiert erkannt wurde.

Die Berghaltehilfe 73 ist weiterhin einem Betriebszustand zugeordnet, welcher ein Berghalten des Elektrofahrrads 100 umfasst. Das Berghalten wird erkannt, wenn das Elektrofahrrad 100 an einer Steigung steht, und dabei im Stillstand gehalten werden soll. Vorzugsweise erfolgt bei der Berghaltehilfe 73 eine Erzeugung eines Motormoments mittels der Antriebseinheit 110 derart, dass das Elektrofahrrad durch das Motormoment im Stillstand an der Steigung gehalten wird. Beispielsweise ist die Berghaltehilfe 73 anwendbar, wenn Voraussetzungen analog der Berganfahrhilfe 72 erkannt wurden.

Die Reichweitensteuerung 74 ist außerdem einem Betriebszustand zugeordnet, welcher einen Navigationsbetrieb des Elektrofahrrads 100 umfasst. Beim Navigationsbetrieb erfolgt eine Ausgabe von Navigationsinformationen an den Nutzer, vorzugsweise mittels der Ausgabeeinheit 20.

Die Reichweitensteuerung 74 umfasst dabei vorzugsweise das Bereitstellen von verschiedenen Unterstützungsmodi in Abhängigkeit der Navigationsinformationen, beispielsweise um gezielt und effizient eine bevorstehende Fahrtstrecke optimal motorunterstützt befahren zu können.

Beispielsweise erfolgt dabei zusätzliche ein Schritt eines Abschätzens einer Auswirkung der Reichweitensteuerung 74 auf den Motorunterstützungs-Betrieb des Elektrofahrrads 100. Dabei ist die Reichweitensteuerung 74 anwendbare, wenn eine vorbestimmte Auswirkung der Reichweitensteuerung 74 auf den Motorunterstützungs-Betrieb erkannt wurde. Vorzugsweise basiert das Abschätzen der Auswirkung auf Daten, insbesondere Kartendaten, eines Navigationssystems des Elektrofahrrads 100, sowie vorzugsweise zusätzlich auf Eigenschaften des Elektrofahrrads 100, wie beispielsweise einem Gesamtgewicht und/oder einem Ladezustand. Das heißt, wenn basierend auf dem Abschätzen erkannt wurde, dass bei einer prognostizierten zukünftigen Fahrt entlang einer bestimmten Fahrstrecke die Reichweitensteuerung 74 aktiv die Motorunterstützung des Elektrofahrrads 100 verändern würde im Vergleich zu einer prognostizierten Fahrt ohne Reichweitensteuerung 74, so wird eine Auswirkung der Reichweitensteuerung 74 auf den Motorunterstützungs-Betrieb erkannt.

## Patentansprüche

1. Verfahren zum Betreiben eines Elektrofahrrads (100), wobei das Elektrofahrrad (100) zumindest einen Unterstützungsmodus (7) für zumindest einen Betriebszustand aufweist, umfassend die Schritte:
- Ermitteln (1) des Betriebszustands des Elektrofahrrads (100),
- Ermitteln (2), ob der zumindest eine Unterstützungsmodus (7) anwendbar ist,
- Ermitteln (3), ob der Unterstützungsmodus (7) aktiviert ist, und
- Anzeigen (4) einer Information an den Nutzer über den zumindest einen dem Betriebszustand zugeordneten Unterstützungsmodus (7), falls der Unterstützungsmodus (7) deaktiviert und anwendbar ist.

2. Verfahren nach Anspruch 1, ferner umfassend :
- Bereitstellen (5) einer Aktivierungsabfrage zur Aktivierung des zumindest einen dem Betriebszustand zugeordneten Unterstützungsmodus (7), und
- insbesondere Aktivieren (6) des Unterstützungsmodus (7) im Ansprechen auf ein Erkennen einer Bestätigung der Aktivierungsabfrage durch den Nutzer.

3. Verfahren nach einem der vorhergehenden Ansprüche, wobei das Anzeigen (4) der Information ein Anzeigen einer Aktivierungsanweisung für den Nutzer zum Aktivieren (6) des zumindest einen dem Betriebszustand zugeordneten Unterstützungsmodus (7) umfasst.

4. Verfahren nach einem der Ansprüche 3 oder 4, ferner umfassend den Schritt:
- Deaktivieren der Anzeige der Information im Ansprechen auf das Aktivieren (6) des Unterstützungsmodus (7).

5. Verfahren nach einem der vorhergehenden Ansprüche, wobei das Anzeigen (4) der Information über einen bestimmten Unterstützungsmodus (7) verhindert wird, wenn in einem aktuellen Fahrzyklus des Elektrofahrrads (100) die Information bereits mindestens einmal angezeigt wurde und/oder wenn in dem aktuellen Fahrzyklus des Elektrofahrrads (100) der bestimmte Unterstützungsmodus (7) bereits mindestens einmal aktiviert wurde und/oder im Ansprechen auf eine manuelle Deaktivierung durch den Nutzer.

6. Verfahren nach einem der vorhergehenden Ansprüche, wobei das Ermitteln (2), ob der zumindest eine Unterstützungsmodus (7) anwendbar ist, frühestens nach Ablauf einer vorbestimmten Start-Zeitspanne nach einem Betriebsstart des Elektrofahrrads (100) durchgeführt wird.

7. Verfahren nach einem der vorhergehenden Ansprüche, wobei der Unterstützungsmodus (7) anwendbar ist, wenn, insbesondere für mindestens eine vorbestimmte Zeitspanne, ein Trittfrequenz-freier Zustand und/oder Motorstillstands-Zustand erkannt wurde.

8. Verfahren nach Anspruch 7, wobei ein Betriebszustand ein Schieben des Elektrofahrrads (100) umfasst, und wobei ein entsprechender Unterstützungsmodus (7) eine Schiebehilfe (71) umfasst.

9. Verfahren nach Anspruch 8, wobei die Schiebehilfe (71) anwendbar ist, wenn eine Steigung und/oder eine vorbestimmte Maximal-Geschwindigkeit und/oder ein Tretmoment-freier Zustand und/oder ein Schiebezustand und/oder ein Vorwärts-Schieben aus einem Stillstand erkannt wurde.

10. Verfahren nach einem der Ansprüche 7 bis 9, wobei ein Betriebszustand ein Berganfahren des Elektrofahrrads (100) umfasst, und wobei ein entsprechender Unterstützungsmodus (7) eine Berganfahrhilfe (72) umfasst.

11. Verfahren nach Anspruch 10, wobei die Berganfahrhilfe (72) anwendbar ist, wenn eine Steigung und/oder ein vorbestimmtes Mindest-Tretmoment und/oder ein Stillstand und/oder eine Fahrradgeschwindigkeit kleiner als ein vorbestimmter Schwellwert erkannt wurde.

12. Verfahren nach einem der vorhergehenden Ansprüche, wobei ein Betriebszustand einen Navigationsbetrieb des Elektrofahrrads (100) umfasst, und wobei ein entsprechender Unterstützungsmodus (7) eine Reichweitensteuerung (74) umfasst, vorzugsweise ferner umfassend den Schritt: Abschätzen einer Auswirkung der Reichweitensteuerung (74) auf einen Motorunterstützungs-Betrieb des Elektrofahrrads (100), wobei die Reichweitensteuerung (74) anwendbar ist, wenn eine vorbestimmte Auswirkung der Reichweitensteuerung (74) auf den Motorunterstützungs-Betrieb erkannt wurde.

13. Verfahren nach einem der vorhergehenden Ansprüche, wobei ein Betriebszustand ein Berghalten des Elektrofahrrads (100) umfasst, und wobei ein entsprechender Unterstützungsmodus (7) eine Berghaltehilfe (73) umfasst.

14. Verfahren nach einem der vorhergehenden Ansprüche, wobei das Anzeigen (4) der Information an den Nutzer mittels einer Ausgabeeinheit (20) akustisch und/oder visuell und/oder haptisch erfolgt, und/oder wobei das Anzeigen (4) der Information an den Nutzer mittels eines Nutzergeräts (30) akustisch und/oder visuell und/oder haptisch erfolgt.

15. Verfahren nach einem der vorhergehenden Ansprüche, wobei das Ermitteln (1) des Betriebszustands des Elektrofahrrads (100) und/oder das Ermitteln, ob der zumindest eine Unterstützungsmodus (7) anwendbar ist, und/oder das Ermitteln (3), ob der Unterstützungsmodus (7) aktiviert ist, basierend auf Sensordaten von zumindest einem Sensor (111) durchgeführt wird.

16. Elektrofahrrad, umfassend eine Steuereinheit (110), welche eingerichtet ist zur Durchführung des Verfahrens (10) nach einem der vorhergehenden Ansprüche.
